Europäisches Patentamt

(19) European Patent Office

Office européen des brevets

(11) Numéro de publication: **0 395 822 A1**

(12) **DEMANDE DE BREVET EUROPEEN**

(21) Numéro de dépôt: 89440042.3

(22) Date de dépôt: 03.05.89

(51) Int. Cl.⁵: **A23L 2/34, C12G 3/00**

(43) Date de publication de la demande:
07.11.90 Bulletin 90/45

(84) Etats contractants désignés:
AT BE CH DE ES FR GB GR IT LI LU NL SE

(71) Demandeur: **S.I.C.A.R.E.X. DE L' ESPIGUETTE**
**Domaine de l'Espiguette**
**F-30240 Le Grau-du-Roi(FR)**

(72) Inventeur: **Broussous, Philippe**
**La Montée de brousse**
**F-30310 Vergèze(FR)**
Inventeur: **Ferrari, Gérald**
**Domaine de l'Espiguette**
**F-30240 le Grau-du-Roi(FR)**

(74) Mandataire: **Arbousse-Bastide, Jean-Claude Philippe**
**CABINET ARBOUSSE BASTIDE 20, rue de Copenhague**
**F-67000 Strasbourg(FR)**

(54) **Procédé de fabrication d'une boisson pétillante faiblement alcoolisée à base de kiwi.**

(57) Après broyage des fruits et enzymage de la purée de fruits en vue d'éliminer les pectines et la cellulose, les jus obtenus par extraction sont soumis successivement à un traitement thermique visant à provoquer la précipitation des protéines instables puis à un second enzymage visant à éliminer complètement les pectines et les sucres complexes, avant d'être clarifiés par collage et soumis à une fermentation puis à un filtrage final.

EP 0 395 822 A1

# PROCEDE DE FABRICATION D'UNE BOISSON PETILLANTE FAIBLEMENT ALCOOLISEE A BASE DE KIWI.

La présente invention a pour objet un procédé de fabrication d'une boisson pétillante faiblement alcoolisée à base de kiwi.

On sait que le kiwi est un fruit de plus en plus largement commercialisé dans les pays européens, dont la plupart en pratiquent actuellement la culture, tout en continuant à l'importer régulièrement des pays gros producteurs.

La parenté de ce fruit avec le raisin a conduit à envisager la fabrication d'une boisson légèrement alcoolisée à base de kiwi, mais sa teneur particulièrement élevée en protéines et en sucres complexes a soulevé des problèmes qui ont fait obstacle à la réalisation d'une telle boisson.

La présente demande a pour but de proposer une solution a ces problèmes par la mise au point d'un procédé de fabrication d'une boisson qui présente tout à la fois les qualités organoleptiques et les qualités de limpidité et de conservabilité exigibles de ce type de produit.

La présente invention a ainsi pour objet un procédé de fabrication d'une boisson pétillante faiblement alcoolisée à base de kiwi, ce procédé se caractérisant essentiellement en ce que la purée de fruits obtenue par broyage est soumise, après addition d'un antioxydant, à un premier enzymage visant à éliminer les pectines et la cellulose afin de faciliter la préclarification et l'extraction des jus, et les jus obtenus par extraction sont soumis à un traitement thermique visant à provoquer la précipitation des protéines instables qui s'y trouvent contenues, puis à un second enzymage visant à éliminer complètement les pectines ainsi que les sucres complexes présents, avant d'être clarifiés par collage et soumis à une fermentation puis à un filtrage final.

Le broyage des fruits préalablement triés est réalisé de préférence dans un fouloir à rouleaux de façon à obtenir une purée épaisse, qui est ensuite transférée dans une cuve où elle est, si nécessaire, soumise à un léger réchauffage, de manière à atteindre une température de l'ordre de 20° C.

La purée de fruits est alors additionnée d'un antioxydant qui est de préférence de l'anhydride sulfureux en solution aqueuse, à raison de 20 à 40 mg/l.

Le mélange obtenu est ensuite soumis à un premier enzymage visant à faciliter l'extraction des jus, et leur préclarification, cet enzymage étant avantageusement opéré au moyen d'une préparation enzymatique renfermant une pectinase, une cellulase et une hémicellulase, à raison de 0,1 à 0,3 ml de préparation enzymatique par kilogramme de purée de fruits.

Après agitation du mélange, l'enzymage est poursuivi pendant une durée de l'ordre de une heure, à température ambiante.

La purée de fruits est alors transférée dans un pressoir où les jus sont extraits et recueillis dans une cuve, les pulpes étant récupérées à part en vue d'une nouvelle extraction, opérée après addition d'eau chaude et stockage d'environ deux heures à température ambiante.

Le traitement thermique que l'on fait ensuite subir aux jus recueillis est rendu nécessaire par la présence de protéines instables, dont il permet la précipitation.

Conformément à l'invention, ce traitement thermique consiste à élever rapidement la température des jus à une température comprise entre 50 et 60° C, cette élévation de température devant être réalisée en une durée de 30 à 50 secondes, et à maintenir les jus à cette température pendant environ une heure.

Ce traitement thermique est avantageusement réalisé au moyen d'un échangeur tubulaire coaxial.

Les jus sont ensuite soumis, conformément à l'invention, à un second enzymage visant à éliminer complètement les pectines et les sucres complexes, essentiellement des arabanes, que renferment les kiwis.

Ce second enzymage est avantageusement opéré au moyen d'une préparation enzymatique renfermant une pectinase, une polygalacturonase et une arabanase, à raison de 0,01 à ,05 ml de préparation enzymatique par litre de jus.

Ce second enzymage constitue une étape également importante du procédé selon l'invention car il permet d'éliminer les arabanes, évitant ainsi des problèmes de précipitation ultérieurs dus à la présence de ces sucres complexes.

Il est effectué de préférence sur les jus partiellement refroidis jusqu'à une température d'environ 45° C, et prolongé pendant une durée de une à deux heures.

Les jus sont ensuite refroidis à une température de 10 à 15° C avant d'être additionnés successivement, sous agitation, de gel de silice et de bentonite.

Le gel de silice est d'abord ajouté au jus dans la proportion de 1 ml/l, et après environ une heure la bentonite à raison de 1 g/l.

Le mélange est ensuite stocké au froid, à une température de l'ordre de 2° C, pendant une durée de l'ordre de 48 heures.

Il est à noter que ce stockage peut être prolongé si nécessaire, et constitue un moyen avantageux de conserver les kiwis pendant un certain laps de temps. Toutefois, si le stockage est prolongé au-delà de 48 heures, il convient de saturer le jus en gaz carbonique afin d'éviter le développement de moisissures à sa surface.

Après soutirage, le jus clair est soumis à une mesure de l'acidité totale et de la teneur en sucre, et il est dilué à l'eau si nécessaire afin d'abaisser son acidité à une valeur égale à 4-5 g/l en équivalent d'acide sulfurique.

Le jus est ensuite additionné de sucre de manière à amener sa teneur en ce produit à 110-120 g/l, avant d'être soumis à une fermentation.

L'addition de sucre dans le jus s'opère avantageusement au moyen de moût de raisin concentré rectifié titrant 80 g/l de sucre, ce produit offrant l'avantage de restituer au jus de kiwi le glucose et le fructose qu'il contient naturellement.

La fermentation du jus est ensuite conduite dans un fermenteur, sous pression de quelques bars, après nouvelle addition d'antioxydant et levurage, à une température comprise entre 15 et 18°C, de manière à favoriser la dissolution du gaz carbonique dégagé.

Lorsque le titre alcoolique atteint 2,8 % ou que la teneur en sucre descend au-dessous de 60 g/l, la fermentation est stoppée par refroidissement à -5°C, et le jus est maintenu environ 12 heures à cette température avant d'être soumis à une dernière filtration, laquelle peut être réalisée sur plaques ou par centrifugation et permet d'éliminer les levures.

Le jus ainsi obtenu peut être ensuite stocké en cuve isobare à 0°C avant d'être mis en bouteilles, l'embouteillage pouvant être précédé d'une addition d'un antioxydant comme l'anhydride sulfureux et d'un conservateur comme le sorbate de potassium, ou suivi d'une pasteurisation de type classique pour ce genre de produit, soit 15 unités Pasteur à 60°C.

L'exemple qui suit illustre un mode de réalisation du procédé selon l'invention, étant bien entendu qu'il ne présente aucun caractère limitatif vis-à-vis de cette dernière.

## EXEMPLE.

On procède au triage de kiwis conservés en chambre froide puis on en effectue un broyage léger dans un fouloir à rouleaux. La purée obtenue est transférée au moyen d'une pompe dans une cuve en acier inoxydable dans laquelle elle est réchauffée jusqu'à 20°C au moyen d'un serpentin plongé dans la cuve et alimenté en eau chaude à 60°C.

On ajoute ensuite de l'anhydride sulfureux en solution aqueuse à raison de 20 à 40 mg/l puis, sous agitation, la préparation enzymatique commercialisée sous la dénomination "PECTINEX SPL" par la Société NOVO, et constituée du mélange d'une pectinase, d'une cellulase et d'une hémicellulase, à raison de 200 ml de cette préparation par tonne de purée de fruits, et on abandonne le mélange pendant une heure à température ambiante.

La purée de fruits est ensuite envoyée dans un pressoir à membrane pneumatique à l'aide d'une pompe alimentée par une vis sans fin placée sous la porte de la cuve. Le pressoir est réglé de façon à obbtenir le maximum de jus à basse pression (0,5 bar et trois cycles sous pression croissante (jusqu'à 2 bars) sont réalisés en 2h30.

Les jus sont recueillis dans une cuve, les pulpes étant récupérées pour subir une nouvelle extraction : à cet effet elles sont additionnées de trois volumes d'eau chaude à 60°C et stockées deux heures à température ambiante avant d'être renvoyées dans le pressoir où elles subissent le même traitement que précédemment.

Les jus procédant des deux extractions successives sont rassemblés dans une cuve et réchauffés rapidement au moyen d'un échangeur tubulaire performant qui permet d'élever en quelques dizaines de secondes leur température à 55°C. Les jus sont maintenus à cette température pendant une heure puis on les laisse refroidir.

Lorsque la température du jus atteint 45°C on ajoute la préparation enzymatique commercialisée sous la dénomination "PECTINEX AR" par la Société NOVO, et constituée d'un mélange de pectinase, de polygalacturonase et d'arabanase, à raison de 5 ml de préparation enzymatique par hectolitre de jus. On laisse les enzymes agir pendant une heure puis on refroidit le mélange à 10°C à l'aide d'un serpentin immergé alimenté en eau froide.

On procède alors à l'addition, sous agitation, d'un gel de silice à raison de 100 ml/hl puis, après une heure, toujours sous agitation, de bentonite à raison de 100 g/hl, après quoi le mélange est refroidi à 2°C et maintenu à cette température pendant 48 heures.

Au bout de ce laps de temps, on soutire le jus par pompage par le haut de la cuve et on effectue la mesure de son acidité totale ainsi que de sa teneur en sucre. Si son acidité totale est supérieure à 5 g/l en équivalent d'acide sulfurique on le dilue à l'eau de manière à abaisser son acidité à cette valeur.

On augmente ensuite la teneur en sucre du jus à 120 g/l par addition de moût de raisin concentré rectifié titrant 800 grammes par litre de sucre.

Le jus est alors pompé dans un fermenteur dont la soupape de surpression est tarée à 6 bars et dont on peut régler la température.

Dans ce fermenteur il subit d'abord une addition d'anhydride sulfureux en solution à raison de 20 mg/l puis d'une levure sèche active préalablement réhydratée dans de l'eau tiède (35° C, 30 mn), à raison de 20 g/hl.

La température de fermentation est maintenue entre 15 et 18° C de façon à favoriser la dissolution du gaz carbonique dégagé.

Lorsque le titre alcoolique dépasse 2,8 % ou que la teneur en sucre s'abaisse à 60 g/l la fermentation est stoppée par abaissement de la température à -5° C.

Après douze heures à -5° C le jus est filtré isobarométriquement sur plaques (grade $K_3$, $K_5$ puis KS) de manière à éliminer les levures.

Le jus ainsi obtenu peut être ensuite stocké en cuves isobares à 0° C avant d'être mis en bouteilles.

## Revendications

1) Procédé de fabrication d'une boisson pétillante faiblement alcoolisée à base de kiwi, caractérisé en ce qu'après broyage des fruits et enzymage de la purée de fruits en vue d'éliminer les pectines et la cellulose, les jus obtenus par extraction sont soumis successivement à un traitement thermique visant à provoquer la précipitation des protéines instables, puis à un second enzymage visant à éliminer complètement les pectines et les sucres complexes, avant d'être clarifiés par collage et soumis à une fermentation puis à un filtrage final.

2) Procédé selon la revendication 1, caractérisé en ce que l'enzymage de la purée de fruits est précédé de l'addition d'un antioxydant et réalisé au moyen d'une préparation enzymatique renfermant une pectinase, une cellulase et une hémicellulase, cette préparation étant mise en oeuvre dans la proportion de 0,1 à ,3 ml/kg et l'enzymage étant poursuivi pendant une durée de l'ordre de 1 à 2 heures à température ambiante.

3) Procédé selon la revendication 2, caractérisé en ce que l'antioxydant ajouté à la purée de fruits avant enzymage est l'anhydride sulfureux, mis en oeuvre dans la proportion de 20 à 40mg/l.

4) Procédé selon la revendication 1, caractérisé en ce que l'extraction des jus consécutive à l'enzymage est réalisée en deux opérations, les pulpes provenant de la première extraction étant soumises à une seconde extraction après addition d'eau chaude et stockage temporaire.

5) Procédé selon la revendication 1, caractérisé en ce que le traitement thermique consiste en une élévation rapide de la température des jus jusqu'à une température comprise entre 50° C et 60° C, cette élévation de température devant être réalisée en un laps de temps compris entre 30 et 50 secondes.

6) Procédé selon la revendication 1, caractérisé en ce que le second enzymage est effectué sûr le jus partiellement refroidi à une température de 35 à 45° C par addition d'une préparation enzymatique renfermant une pectinase, une polygalacturonase et une arabanase, cette préparation enzymatique étant mise en oeuvre dans la proportion de 0,01 à 0,05 ml/l, et l'enzymage étant poursuivi pendant une durée de l'ordre de 1 à 2 heures.

7) Procédé selon la revendication 1, caractérisé en ce que le collage est réalisé sur le jus préalablement refroidi à une température de l'ordre de 10° C à 15° C par addition sous agitation de gel de silice dans la proportion de 80 à 100 ml/hl, puis, après une heure environ, de bentonite, dans la proportion de 80 à 100 g/hl.

8) Procédé selon l'une quelconque des revendications précédentes, caractérisé en ce que le collage est suivi d'un stockage au froid pendant une durée de l'ordre de 48 heures, ce stockage au froid précédant le soutirage.

9) Procédé selon l'une quelconque des revendications précédentes, caractérisé en ce que le jus clair soutiré est soumis à une vérification de son acidité et de sa teneur en sucre, dilué si nécessaire pour abaisser son acidité à 5 g/l en équivalent d'acide sulfurique, puis enrichi en sucre de façon à amener sa teneur en sucre à une valeur comprise entre 110 et 130 g/l.

10) Procédé selon la revendication 11, caractérisé en ce que l'enrichissement du jus en sucre est réalisé par addition de moût de raisin concentré rectifié titrant 800 g/l de sucre.

11) Procédé selon l'une quelconque des revendications précédentes, caractérisé en ce que la fermentation du jus est réalisée à une température de 15° C à 18° C, après addition d'un antioxydant et d'une levure.

12) Procédé selon la revendication 11, caractérisé en ce que l'antioxydant ajouté au jus avant fermentation est l'anhydride sulfureux, mis en oeuvre dans la proportion de 20 à 30 mg/l.

13) Procédé selon l'une quelconque des revendications précédentes, caractérisé en ce que la fermentation est stoppée par abaissement de la température à -5° C lorsque le titre alcoolique dépasse 2,8 % ou que la teneur en sucre descend endessous de 60 g/l.

14) Procédé selon l'une quelconque des revendications précédentes, caractérisé en ce que le filtrage final du jus est effectué après stockage pendant environ 12 heures à -5° C.

15) Boisson pétillante à base de kiwi, obtenue selon le procédé qui fait l'objet des revendications 1 à 14.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN vol. 6, no. 231 (C-135)(1109), 17 novembre 1982; & JP - A - 57 132875 (KAYASHIMA SHIYUZOU K.K.) 17.08.1982 --- | 1 | A 23 L 2/34 C 12 G 3/00 |
| A | PATENT ABSTRACTS OF JAPAN vol. 9, no. 171 (C-291)(1894), 16 juillet 1985; & JP - A - 60 43367 (AKIRA TODA) 07.03.1985 ----- | 1 | |

**DOMAINES TECHNIQUES RECHERCHES (Int. Cl.5)**

A 23 L 2/00
C 12 G 3/00

Le présent rapport a été établi pour toutes les revendications

| Lieu de la recherche | Date d'achèvement de la recherche | Examinateur |
|---|---|---|
| BERLIN | 09-01-1990 | SCHULTZE D |

EPO FORM 1503 03.82 (P0402)